# EUROPEAN PATENT SPECIFICATION

(11) **EP 3 361 407 B1**
(45) Date of publication and mention of the grant of the patent: **29.07.2020**
(21) Application number: 17188672.4
(22) Date of filing: 31.08.2017
(51) Int. Cl.: G06F 21/56, H04L 29/06

(54) **SYSTEM AND METHOD FOR PERFORMING ANTIVIRUS SCAN OF A WEB PAGE**
SYSTEM UND VERFAHREN ZUM AUSFÜHREN EINES ANTIVIRUS-SCANS VON WEBSEITEN
SYSTÈME ET PROCÉDÉ PERMETTANT D'EFFECTUER UN BALAYAGE ANTIVIRUS D'UNE PAGE WEB

(30) Priority: 08.02.2017 RU 2017104132; 12.06.2017 US 201715620121
(43) Date of publication of application: 15.08.2018
(73) Proprietor: AO Kaspersky Lab, Moscow 125212 (RU)
(72) Inventor: GALCHENKO, Anton B., Moscow 125212 (RU); USTINOV, Mikhail V., Moscow 125212 (RU)
(74) Representative: Sloboshanin, Sergej

(56) References cited:
- US-A1- 2006 155 671
- US-A1- 2011 197 177
- US-A1- 2015 271 202
- US-B1- 8 087 081

## Description

### FIELD OF TECHNOLOGY

The present disclosure relates to systems and methods for performing an antivirus scan on a web page, and, in particular, to systems and methods of allocating the productivity reserve of an antivirus server.

### BACKGROUND

The volume of information processed by servers is constantly growing each day. An unregulated flow of requests in the course of data processing by a server often results in a nonworking state of the server. Failure results from overloading of the request queue and the physical limitation of the resources of computer technology. In order to monitor the load on server resources, methods are used to analyze the request flow and the request queue. The monitoring process is made harder due to an uncontrollable increase in the number of requests.

A shutdown of computer systems which are handling the processing of requests causes harm to the productivity of complex computer systems whose working is based on the sending or receiving of requests. In this regard, some of the mentioned systems interrupt the execution of tasks and go into a waiting mode until the request execution is completed. One such system is a system that scans files for the presence of malicious code with the use of remote computer systems or servers. In such a case, there is a drop in one of the fundamental indicators of the effectiveness of such systems - the level of detection.

One common architecture for executing requests uses at least three components: an element which generates and makes the request, a communications channel, and an element which processes the received request and issues the response. The element which generates and makes the request can be an application installed on a computer system. The element which processes the received request can be a computer system of the server type, which contains a repository of data or functionalities by virtue of which the request will be processed and a response to the request will be produced. The communications channel is a known type of connection enabling a transfer of data from one element to another.

From US 2015/0271202 A1 a method for detecting a link layer hijacking is known. The method includes: requesting web page information to a HTTP server; receiving from the HTTP server the web page information and a monitoring script preset on the HTTP server. According to the method, an information related to URL in the received web page information is sent to an analyzing server based on the monitoring script. The analyzing server parses URL text information from the information related to the URL and determines whether the link layer hijacking occurs in the received web page information based on the URL text information.

US 8,087,081 B1 discloses a method of selecting a remotely located security server computer for computer security operation. According to the method, a client computer is configured to select one of several remotely located server computers for protection against online threats. The client computer is further configured to determine an operational state of the server computers and determine a protection status of the client computer resulting from use of a server computer of a particular operational state. The operational state determination is based on available bandwidth for network communication between the client computer and the server computer. The client computer is further configured to allow for automatic or manual selection of another server computer when the currently selected server computer results in the client computer having a protection status below a threshold level.

US 2006/0155671 A1 discloses a method of transferring a part of or all of an image of a system or disk to another computer dedicated to perform a resource-intensive task as, for example, search tasks, security tasks, maintenance tasks. Once the dedicated computer has performed the task, the resulting image is compared to the current image of the client system or disk to produce an updated image. The client system or disk is then updated with the updated image.

While known techniques may perform some kind of monitoring of the process of request execution, the known techniques do not identify the optimal allocation of productivity reserve of the antivirus server when performing the antivirus scan of web pages. The present disclosure allows an effective solution to this problem.

### SUMMARY

Disclosed are systems and methods of controlling the productivity of an antivirus server. The technical result of the present disclosure increases the effectiveness of use of the productivity reserve of an antivirus server when performing an antivirus scan of a web page. Said technical result is accomplished by allocating a portion of the productivity reserve of the antivirus server for performing the antivirus scan of a web page in accordance with a selected speed of dispatching information from the module of the antivirus system for scanning web pages to the antivirus server. The speed of dispatching information is determined on the basis of a generated text set in markup language of the web page being opened for the antivirus scan, the communications channel capacity between the module of the antivirus system for scanning web pages and the antivirus server, and the productivity reserve of the antivirus server, making use of speed selection rules. The invention is as defined in the appended claims.

In one example, a system for performing an antivirus scan of a web page by an antivirus system is provided. The system includes an antivirus server; and a client module of the antivirus system for scanning of web pages module. The client module is configured to: detect text in markup language of a web page being opened; generate a text set in the markup language of the web page being opened for the antivirus scan; determine a capacity of a communications channel between the client module and the antivirus server; and determine a productivity reserve of the antivirus server. The antivirus server is configured to: select a speed of dispatching information from the client module to the antivirus server based on the generated text set in markup language of the web page being opened for the antivirus scan, the determined capacity of the communications channel, and the determined productivity reserve of the antivirus server; and allocate a portion of the determined productivity reserve of the antivirus server to perform the antivirus scan of the generated text set in markup language of the web page being opened, based on the selected information dispatching speed; and perform the antivirus scan of the generated text set in markup language of the web page being opened using the allocated portion of the productivity reserve of the antivirus server.

In one further example, the antivirus server is further configured to select the speed of dispatching information from the module of the antivirus system for scanning of web pages to the antivirus server further based on at least one speed selection rule from a rules database.

In one further example, the client module configured to detect text in markup language of a web page being opened is further configured to: detect a successful execution of a series of interactions with a graphical user interface of the web browser that signify an opening of the web page in the web browser.

In one further example, the client module configured to detect text in markup language of a web page being opened is further configured to: detect a transition by a hyperlink located on the web page being opened.

In one further example, the client module configured to detect text in markup language of a web page being opened is further configured to detect one or more events generated by the web browser which indicate alteration of a document object of the web page being opened.

In one further example, the client module configured to generate the text set in the markup language of the web page being opened for the antivirus scan is further configured to add strings containing an insertion of program text in a programming language.

In one further example, the client module configured to generate the text set in the markup language of the web page being opened for the antivirus scan is further configured to add characters and strings of text in markup language of the web page being opened that contain a tag.

In one further example, the client module configured to determine the capacity of the communications channel between the client module and the antivirus server is further configured to dispatch a plurality of requests containing a verified text set in markup language of a predetermined size, detect receipt of the requests, and calculate time spent on transmission of the verified text set in markup language of predetermined size.

In one further example, the client module configured to determine the productivity reserve of the antivirus server is further configured to perform a forced antivirus scan of a verified text set in markup language of predetermined size, and to calculate time spent on scanning the verified text set.

In another example, a method is provided for performing an antivirus scan of a web page by an antivirus system. The method includes receiving, from a client module of a web browser application, a text set generated based on markup language of a web page being opened for an antivirus scan; receiving an indication of a capacity of a communications channel between the client module and an antivirus server; determining a productivity reserve of the antivirus server; selecting a speed of dispatching information from the client module to the antivirus server based on the received text set in markup language of the web page being opened for the antivirus scan, the received capacity of the communications channel, and the determined productivity reserve of the antivirus server; allocating a portion of the determined productivity reserve of the antivirus server to perform the antivirus scan of the generated text set in markup language of the web page being opened, based on the selected information dispatching speed; and performing, by the antivirus server, the antivirus scan of the generated text set in markup language of the web page being opened using the allocated portion of the productivity reserve of the antivirus server.

According to another example, a method is provided for performing an antivirus scan of a web page by an antivirus system. The method includes detecting, by a client module of the antivirus system, text in markup language of a web page being opened; generating a text set in the markup language of the web page being opened for the antivirus scan; determining a capacity of a communications channel between the client module and an antivirus server; determining a productivity reserve of the antivirus server; and transmitting, to the antivirus server, the web page being opened, to perform the antivirus scan, according to a dispatching information speed selected based on the determined capacity of the communications channel and the determined productivity reserve of the antivirus server. This method may further comprise transmitting, to the antivirus server, the determined capacity of the communications channel, and the determined productivity reserve of the antivirus server; and directing the antivirus server to perform the antivirus scan of the generated text set in markup language of the web page being opened using an allocated portion of the productivity reserve of the antivirus server. Further, in this method, the dispatching information speed may specify a request payload size and a request sending time interval. Further, in this method, detecting text in markup language of the web page being opened may comprise at least one of: detecting a successful execution of a series of interactions with a graphical user interface of the web browser that signify an opening of the web page in the web browser; detecting a transition by a hyperlink located on the web page being opened; and detecting one or more events generated by the web browser which indicate alteration of a document object of the web page being opened. Further, in this method, determining the capacity of the communications channel between the client module and the antivirus server may further comprise dispatching a plurality of requests containing a verified text set in markup language of a predetermined size, detecting receipt of the requests, and calculating of time spent on transmission of the verified text set in markup language of predetermined size.

The above simplified summary of example embodiments serves to provide a basic understanding of the present disclosure. This summary is not an extensive overview of all contemplated embodiments, and is intended to neither identify key or critical elements of all embodiments nor delineate the scope of any or all embodiments of the present disclosure. Its sole purpose is to present one or more embodiments in a simplified form as a prelude to the more detailed description of the disclosure that follows. To the accomplishment of the foregoing, the one or more embodiments of the present disclosure include the features described and exemplarily pointed out in the claims.

### BRIEF DESCRIPTION OF THE DRAWINGS

The accompanying drawings, which are incorporated into and constitute a part of this specification, illustrate one or more example embodiments of the present disclosure and, together with the detailed description, serve to explain their principles and implementations.
**Fig. 1** illustrates a block diagram of an antivirus system for scanning web pages and an antivirus server according to an example.
**Fig. 2** illustrates a block diagram of an example system for allocating a portion of productivity reserve of the antivirus server in performing the antivirus scan of a web page according to an example.
**Fig. 3** illustrates a flowchart of a method for allocating a portion of the productivity reserve of the antivirus server in performing the antivirus scan of a web page according to an example.
**Fig. 4** illustrates a block diagram of an example of a general-purpose computer system on which the disclosed system and method can be implemented according to an example.

### DETAILED DESCRIPTION

Example embodiments are described herein in the context of a system, method and computer program product for performing an antivirus scan of a web page. Those of ordinary skill in the art will realize that the following description is illustrative only and is not intended to be in any way limiting. Other embodiments will readily suggest themselves to those skilled in the art having the benefit of this disclosure. Reference will now be made in detail to implementations of the example embodiments as illustrated in the accompanying drawings. The same reference indicators will be used to the extent possible throughout the drawings and the following description to refer to the same or like items.

A web browser is an application (hardware or software) designed to receive and process user requests for access to the Internet (to visit a web page), transmit the request to the Internet, and process a response to this request from the Internet (a server containing the web page). The main function of a web browser is the processing and displaying of the web page received in response to the request. A web browser extension, also known as a web browser add-on or a web browser plug-in, is a software component, launched by the web browser, which alters or extends the functional capabilities of the web browser.

A web page is a document whose text is composed in markup language, for example in hypertext markup language (HTML). The text of a web page in markup language (also referred to herein more simply as "markup text"), for example in accordance with the rules and specification of HTML, may contain characters and strings with the text of programs written in other programming languages (such as JavaScript, ECMA-262), which need to be separated by tags of markup language (such as <script>, </script>). In order to execute the strings and characters of text of programs in a programming language, the web browser can use an additional tool, extension or library (API) containing a compiler or interpreter for that program text or code.

In some cases, web pages can be specially created or modified to perform malicious actions upon being opened and processed by a web browser. To create or modify such a web page to perform malicious actions, a hacker might create and insert into the text of the web page being opened different markup text whose processing by the web browser results in the performance of malicious actions. That is, the text in markup language whose processing by the browser results in performance of malicious actions contains characters or strings in markup language whose processing by the web browser performs a malicious action.

Code injection, or more specifically, web injection, is a technique for exploiting web browsers in which text in a markup language not originally belonging to the web page being opened is inserted in the course of the opening of the web page. The inserted text may contain text in markup language with insertions of program text in a programming language (such as in JavaScript). As an example, web injections are often used by Trojan banking applications to perform malicious actions with user bank accounts. The known Trojans Zeus and SpyEye are among the first to use web injections to compromise banking sites and alter their content.

Another example of text in markup language whose processing by a browser results in performance of malicious actions are characters or strings of markup text using certain tags that have been characterized as suspicious because of their ability to incorporate external files and media, such as <iframe>, <object>, <embed>. The text within the tags may contain links to unknown or suspicious resources. Of special interest are the attributes used in the tags. For example, attributes influencing the external appearance of the information being displayed may signify attempts to mask or disguise malicious actions using techniques for stealthiness in page viewing, for example, very small values of the attributes width/height (0-10 pixels) to minimize the visible size, positioning tricks to align information in non-visible regions (e.g., "position:absolute") and other stylesheet tricks for controlling how content is rendered on the webpage (e.g., "display:none").

In order to provide safety when opening web pages, an antivirus scan of the web pages being opened can be performed. An antivirus scan of web pages is a scan of the text of the web pages in markup language for the presence of markup text whose processing by the web browser results in the performance of malicious actions. The antivirus scan of web pages is done with the aid of an antivirus system configured for the antivirus scanning of web pages.

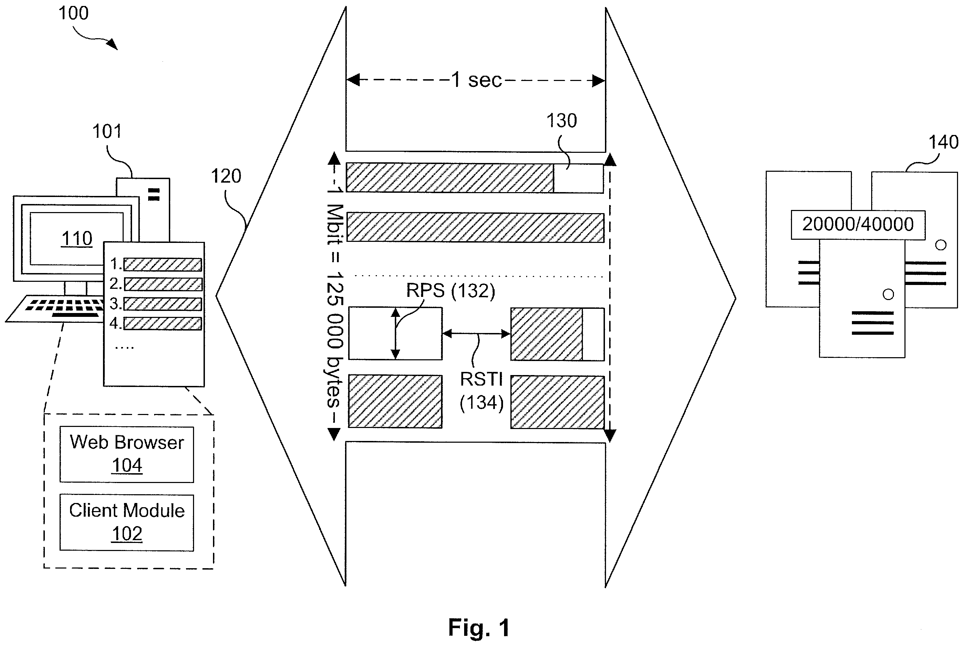

**Fig. 1** shows an example of an antivirus system **100** for scanning web pages according to an example. The system **100** includes a client module **102** of the antivirus system **100** for scanning web pages **110** configured to send requests **130** to an antivirus server **140** for the scanning of web pages with the use of an available communications channel**120**.

In one example, the client module **102** of the antivirus system for scanning web pages **110** is configured to gather and process text of web pages **110** in markup language that are being opened by a web browser application **104.** In one example, the client module **102** of the antivirus system for scanning web pages **110** is an installable module embodied in the form of a browser extension. In this case, the antivirus system scans all web pages being opened in the web browser **104** with the installed module. In another example, the client module **102** of the antivirus system for scanning web pages **110** is implemented as strings of text of the web page being opened in markup language with insertions of application text in a programming language (such as JavaScript), which is added at the behest of the web page owner. In this case, the client module **102** switches to an active state after opening the web page, and the antivirus system performs a scanning of only the opened web page, with the client module **102** added to the text of the web page in markup language.

In one example, the client module **102** of the antivirus system for scanning web pages **110** may not have functionality that performs an antivirus scan of web pages on the computer system **101** with the web browser **104** that was used to open the web pages. Rather, based on the text of the web pages being opened that has been gathered and processed, the client module **102** of the antivirus system for antivirus scanning of web pages **110** composes and sends requests **130** for scanning the text of the web pages in markup language to an antivirus server **140** with the use of the available communications channel **120.**

The communications channel **120** is a connection for the transmission of information between the client module **102** of the antivirus system for scanning web pages **110** and the antivirus server **140.** The communications channel **120** may be any of the full array of technical means providing for a transmission of electrical signals from a message source to a user, including via the Internet and other networks. The capacity of the communications channel **120** is the maximum amount of information units per unit of time that can be transmitted through the information transmission channel.

The antivirus server **140** in a system for antivirus scanning of web pages may be a computer server system configured to perform antivirus scanning of characters and strings of text of web pages being opened that are contained in requests **130** received from the client module **102** of the antivirus system for scanning **110.** The antivirus server **140** may contain or be connected to databases used to perform the antivirus scanning, such as a database of descriptions of malicious web applications or a database of text in markup language whose processing by a browser results in the performance of malicious actions.

In order to ensure control of the productivity of the antivirus server **140** when performing the antivirus scan of web pages, a system is used for allocating a portion of the productivity reserve of the antivirus server in performing the antivirus scan of a web page.

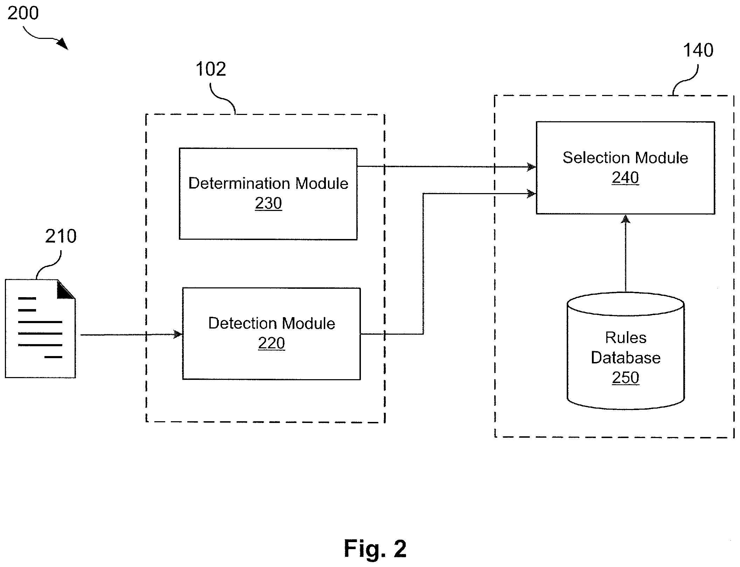

**Fig. 2** shows a structural diagram of an example system **200** for allocating a portion of the productivity reserve of the antivirus server in performing the antivirus scan of a web page according to an example. In one example, the system **200** for allocating a portion of the productivity reserve of the antivirus server in performing the antivirus scan of a web page includes a detection module **220,** a determination module **230,** a selection module **240,** and a database **250.**

The detection module **220** is configured to detect text in markup language of a web page being opened **210,** generate a text set in markup language of the web page being opened for the antivirus scan, and transmit the generated text set in markup language of the web page being opened for the antivirus scan to the selection module **240.**

In some examples, the detection module **220** can be situated in the client module **102** of the antivirus system for scanning web pages **110** and make use of its functions. The user opens the web page **210** with the aid of a web browser. The detection module **220** is configured to detect the text in markup language of the web page being opened **210.**

In some examples, the detection module **220** detects text in markup language of a web page being opened **210** by pinpointing the successful execution of a series of interactions with a graphical user interface of the web browser which signify the request for and opening of a web page in the web browser for example: activation of an URL string entry field of the web browser, entry of the characters of the URL string in the active entry field and pressing of the <Enter> key. In the event that the requested web page exists, and the web server storing the text in markup language of the requested web page is available, or the instrument for its dynamic creation is available, the result of the performance of the aforementioned actions will be the detection of text in markup language of the web page being opened **210.** In another example, the detection module **220** detects text in markup language of a web page being opened **210** by identifying a page transition by a hyperlink located on the already opened web page. Each successful transition by the hyperlink on the web page enables the detecting of text in markup language of the web page being opened **210.** In the event that there are several web pages being opened, the detection of text in markup language of each web page will be done in turn as they are opened. In another example, the detection module **220** detects text in markup language of a web page being opened **210** by analyzing events altering the web page being opened. For example, the detection module **220** may be configured to detect one or more HTML mutation notifications (e.g., via a MutationEvent handler or MutationObserver callback function) which are dispatched by a web browser application as notifications of any changes to the structure of the web page document, including attribute, text, or name modifications. In the course of the analysis, the detection module **220** detects additional new characters or strings of the web page in markup language, which are produced by the occurrence of that notification.

After detection of the text in markup language of the web page being opened **210,** the detection module **220** generates a text set in markup language of the web page being opened for the antivirus scan. In some examples, the text set in markup language of the web page being opened for the antivirus scan is a set of characters or strings of text in markup language of the web pages, or in other programming languages (such as JavaScript) in the context of the tags of markup language which have been prepared for the antivirus scan. The set may contain text characters or strings in markup language of several web pages.

The detection module **220** may generate the text set in markup language of the web page being opened by adding to the set individual text characters or strings of the web page being opened in markup language. In one example, the entire text of the web page being opened is added to the set, for example in the case when the size of the entire text in markup language of the web page being opened does not exceed a given value. In another example, the detection module **220** generates the text set in markup language of the web page being opened by adding only those strings which contain insertions with text of programs in programming languages, and also several lines of text in markup language of the web page being opened which come before and after them. In another example, the detection module **220** generates the text set in markup language of the web page being opened for the antivirus scan adding only the text characters and strings of the web page being opened in markup language that contain tags, such as <iframe>, </iframe> and so on. In yet another example, the detection module **220** generates the text set in markup language of the web page being opened for the antivirus scan by excluding those rows and columns of text in markup language of the web page being opened that have been previously dispatched, for example, during a repeated opening of the web page (refreshing of the web page display). In the event that there are several web pages being opened, or if the web page has a complex structure with many embedded web pages and hyperlinks, the detection module 220 may generate the text set in markup language of the web page being opened for the antivirus scan by alternately adding text strings or characters in markup language from each of the web pages being opened.

During generation, the text set in markup language of the web page being opened for the antivirus scan may be limited in size or in period of time. The maximum size of the text set in markup language of the web page being opened for the antivirus scan may be the maximum number of characters or bytes of information which the text set in markup language of the web page being opened for the antivirus scan can contain. The period of time for the generating of the text set in markup language of the web page being opened for the antivirus scan may be the period of time during which the text set in markup language of the web page being opened for the antivirus scan is generated.

In one example, in the course of a (sometimes lengthy) period of time of generation of the text set in markup language of the web page being opened for the antivirus scan, the user can continue to open various web pages whose individual text characters and strings in markup language go in turn into the set being generated. In another example, the text set in markup language of the web page being opened is generated during a short period of time, and in the course of the generation only those strings and characters are added, for example, that contain text of programs in the programming language JavaScript in the tags <script> </script>.

After completing the generation, the detection module **220** sends the generated text set in markup language of the web page being opened for the antivirus scan to the selection module **240.**

The determination module **230** may be configured to determine the communications channel capacity between the client module **102** of the antivirus system for scanning web pages **110** and the antivirus server **140,** to determine the productivity reserve of the antivirus server **140** and to transmit data on the calculated communications channel capacity and the determined productivity reserve of the antivirus server **140** to the selection module **240.**

In some examples, the productivity is the volume of work which can be done by a computer in a unit of time. For example, one can define this parameter as the number of tasks performed in a given time. The productivity of an antivirus server **140** in performing an antivirus scan of web pages is the number of text characters or bytes in markup language whose antivirus scan can be performed by the antivirus server **140** in a period of time. In some examples, the peak productivity of an antivirus server in performing an antivirus scan of web pages may be the maximum number of text bytes or characters in markup language whose antivirus scan can be performed by the antivirus server without overload. In some examples, the current productivity of an antivirus server in performing an antivirus scan of web pages may be the number of text bytes or characters in markup language whose antivirus scan can be performed by the antivirus server at the current moment of time. As such, the determination module **230** may calculate the productivity reserve as the difference between the value of the peak and the current productivity of the antivirus server, as measured by the additional number of text characters or bytes in markup language whose antivirus scan can be performed by the antivirus server to reach its peak productivity.

In one example, the determination module **230** may be situated in the client module **102** of the antivirus system for scanning web pages **110** and makes use of its functions. In this case, the determination module **230** is configured to determine the communications channel capacity between the client module **102** of the antivirus system for scanning web pages **110** and the antivirus server **140** by dispatching requests containing a verified text set in markup language of known size from the module of the antivirus system for scanning web pages **110** to the antivirus server **140,** confirming the reception of the requests, and calculating the time spent on transmitting the verified text set in markup language of known size. The determination module **230** may determine the productivity reserve of the antivirus server **140** by periodically performing a "forced" antivirus scanning of the received verified text set in markup language of known size and calculating the time spent on its scanning. The determination module **230** re-scans a previously verified text set, of which the contents are "forced" to be considered unknown. This will cause the scan to be performed using the full set of antivirus server capabilities. The size of the received set is known, and the antivirus server **140** is able to give notice as to the ending of the scan or the current productivity during the performance of the antivirus scan, which makes it possible to calculate the productivity reserve of the antivirus server **140.** Put another way, since the size of the received set and the scan verdict are already known from the previous check, based on the information about the results of the forced re-scan, the determination module **230** is able to draw a conclusion about the current performance of the antivirus server **140.** After a time, it is possible to re-scan the same set, forcing the server to consider it unknown.

In an alternative example, the determination module **230** may be situated on the antivirus server **140** and makes use of its functions. In this case, the determination module **230** determines the communications channel capacity between the client module of the antivirus system for scanning web pages **110** and the antivirus server **140** by dispatching requests (responses to a request) containing a verified text set in markup language of known size from the antivirus server **140** to the client module **102** of the antivirus system for scanning **110,** confirming the reception of the verified text set in markup language of known size, and calculating the time spent on the transmission. In this case, the determination module **230** has constant access to the data on the productivity reserve of the antivirus server **140.**

The determination module **230** constantly maintains up-to-date information on the communications channel capacity between the module of the antivirus system for scanning web pages **110** and the antivirus server **140,** and therefore does not have to be dependent on the results of the working of the detection module **220.** The determination module **230** transmits data on the calculated communications channel capacity and the determined productivity reserve of the antivirus server **140** to the selection module **240.**

The selection module **240** is configured to select the speed of dispatching information from the module of the antivirus system for scanning web pages **110** to the antivirus server **140** on the basis of the generated text set in markup language of the web page being opened for the antivirus scan, the determined communications channel capacity, and the determined productivity reserve of the antivirus server **140** with the use of one or more speed selection rules from the rules database **250.** The selection module **240** may be also configured to calculate the portion of the determined productivity reserve of the antivirus server **140** needed to perform the antivirus scan of the generated text set in markup language of the web page being opened for the antivirus scan, taking into account the selected speed of information dispatching, and allocate the calculated portion of the productivity reserve of the antivirus server **140.**

In one example, the selection module **240** may be situated on the antivirus server **140** and is configured to select the speed of information dispatching from the client module **102** of the antivirus system for scanning web pages **110** to the antivirus server **140** on the basis of the data received from the detection module **220** and the determination module **230** with the use of speed selection rules from the rules database **250.**

In some examples, the speed of dispatching information from the module of the antivirus system for scanning web pages **110** to the antivirus server **140** may be represented by the number of bytes occupied by the text in markup language of the web page being opened for the antivirus scan per second that is being dispatched by the client module **102** of the antivirus system for scanning web pages **110** to the antivirus server **140** in the form of requests.

The exchange of information between the client module **102** of the antivirus system for scanning web pages **110** and the antivirus server **140** is done by sending requests to the antivirus server **140** and receiving responses. For example, once more referring to **Fig. 1****,** the request **130** may be a hypertext transfer protocol (HTTP) message dispatched by the client module **102** of the antivirus system for antivirus scanning of web pages **110** to the antivirus server **140.** An HTTP message is the basic unit of HTTP communications, comprised of a structured sequence of octets, composed according to HTTP syntax, and transmitted by the available connection. HTTP messages can be of two types: a request from a client to the server and a response from the server to the client. The core of the request (response) **130** includes information transmitted as the payload of the request or response. It is understood that certain embodiments of the present disclosure can be implemented using other communication protocols besides HTTP, and a protocol with a different syntax of requests and responses can be used, such as Simple Network Management Protocol (SNMP).

The selection module **240** may be configured to change the speed of dispatching the information by specifying a request payload size (RPS) **132** and a request sending time interval (RSTI) **134** for the request(s) **130.** In some examples, the antivirus serer **140** modifies its behavior with respect to communications with the client module **102** to enforce the new RPS and RSTI settings as configured by the selection module **240.** In some examples, the payload size **132** of the request **130** may be the number of bytes of data being transmitted, apart from service commands and information needed for dispatching the request, e.g., data after the headers and CRLF of a HTTP request. For example, the payload can be strings and characters of a text set in markup language of a web page being opened. In some examples, the time interval **134** between sending of requests **130** (e.g., RSTI) may be the segment of time between two consecutive dispatches of requests **130.**

As mentioned earlier, the selection module **240** may use one or more speed selection rules from the rules database **250.** A speed selection rule may be a set of conditions by which the selection module **240** selects the speed of dispatching information from the client module **102** of the antivirus system for scanning web pages **110** to the antivirus server **140.** In some examples, a speed selection rule may include conditions for the productivity reserve of the antivirus server **140,** the communications channel capacity, and the size of the text set in markup language of the web page being opened for the antivirus scan.

The rules database **250** is configured to store the speed selection rules. Different kinds of databases can be used as the rules database **250,** namely: hierarchical (IMS®, TDMS, System 2000), neural net (Cerebrum, Cronospro, DBVist), relational (DB2®, Informix®, Microsoft SQL Server®), object-oriented (Jasmine®, Versant®, POET®), object-relational (Oracle Database", PostgreSQL™, FirstSQL/J®), functional, and so forth. The rules database **250** can be supplemented or updated with the aid of the antivirus server **140.**

In some examples, a speed selection rule may be configured to limit the utilization of the entire productivity reserve of the antivirus server **140** based on the communications channel capacity, and can have the following list of conditions: if the productivity reserve of the antivirus server **140** is greater than the communications channel capacity, while the size of the text set in markup language of the web page being opened has a larger value than the value of the capacity in one second, then a speed of information dispatching is selected which is equal to or less than the communications channel capacity. For example, the selection module **240** may determine the conditions of the above-described speed selection rule is satisfied by a situation in which the productivity reserve is 500,000 bytes per second, the communications channel capacity is 125,000 bytes per second, and the size of the text set in markup language of the web page being opened for the antivirus scan is 1,000,000 bytes. In this case, the communications channel capacity limits the utilization of the entire productivity reserve of the antivirus server **140** at a level of 125,000 bytes per second. Therefore, the selection module **240** determines the speed of dispatching information as 125,000 bytes per second, by changing the request payload size **132** to a value of 12,500 bytes, and the request sending time interval **134** to 0.1 seconds.

In another example, a speed selection rule can be configured to use the value of the productivity reserve to prevent the full utilization of the communication channel **120,** and may have the following list of conditions: if the productivity reserve of the antivirus server **140** is less than the communications channel capacity, while the size of the text set in markup language of the web page being opened for the antivirus scan has a larger value than the value of the capacity in one second, then a speed of information dispatching is selected which is equal to or less than the productivity reserve of the antivirus server **140.** For example, the selection module **240** determines that the above-described set of conditions is satisfied by a situation in which the determined productivity reserve is 100,000 bytes per second, the determined communications channel capacity is 250,000 bytes per second, and the detected size of the text set in markup language of the web page being opened for the antivirus scan is 1,000,000 bytes. In this case, the value of the productivity reserve of the antivirus server does not allow full utilization of the communication channel capacity and limits it to a level of 100,000 bytes per second. Therefore, the selection module **240** determines the speed of dispatching information as 100,000 bytes per second, by changing the request payload size **132** to a value of 10,000 bytes, and the request sending time interval **134** to 0.1 seconds.

In another example, a speed selection rule may be configured to prevent use of the antivirus server **140** on account of the risk of overloading the server, and have the following list of conditions: if the productivity reserve tends toward zero, the communication channel capacity is other than zero, and the size of the text set in markup language of the web page being opened for the antivirus scan has a larger value than the value of the capacity per second, then a speed of information dispatching is selected which is equal to zero, and the generated text set in markup language of the web page being opened is sent on for additional generation of several seconds. For example, the selection module **240** may determine that this set of conditions is met by a situation in which the determined productivity reserve is 0 bytes per second, the communications channel capacity is 250,000 bytes per second, and the size of the text set in markup language of the web page being opened for the antivirus scan is 1,000,000 bytes. In this case, it is undesirable to use the antivirus server **140** in the usual way on account of the risk of an overload. Therefore, the selection module **240** selects the speed of dispatching information as 0 bytes per second by changing the request payload size **132** to a value of 0 bytes, the request sending time interval **134** to 0 seconds, and the generated text set in markup language of the web pages is sent on for additional generation of 10 seconds.

The selection module **240** may also calculate the portion of the determined productivity reserve of the antivirus server **140** for performing the antivirus scan of the generated text set in markup language of the web page being opened taking into account the selected speed of information dispatching. Responsive to this, the selection module **240** allocates the calculated portion of the productivity reserve of the antivirus server **140.**

On the basis of the selected information dispatching speed, the selection module **240** may calculate the portion of the productivity reserve of the antivirus server **140** to perform the antivirus scan of the generated text set in markup language of the web page being opened for the antivirus scan. For example, responsive to determining the information dispatching speed is equal to 100,000 bytes per second, the productivity reserve of the antivirus server is equal to 500,000 bytes per second, and the size of the text set of the web page in markup language for the antivirus scan is equal to 1,000,000 bytes, the selection module **240** calculates 100,000 bytes per second for 10 seconds as the allocated portion of the productivity reserve of the antivirus server **140.**

The selection module **240** then allocates the portion of the productivity reserve of the antivirus server at 100,000 bytes per second for 10 seconds and initiates the performance of the antivirus scan of the web page being opened. Thus, the reserve of the antivirus server **140** after allocating the aforementioned portion will be 400,000 bytes per second for 10 seconds. After 10 seconds, the antivirus scan finishes and the antivirus server will again have a productivity reserve of 500,000 bytes per second.

In one example, the selection module **240** allocates and utilizes the portion of the productivity reserve of the antivirus server **140** by assigning priorities to the requests received. In another example, the selection module **240** allocates and utilizes the portion of the productivity reserve of the antivirus server **140** by calling upon unutilized resources of the antivirus server **140** (RAM, processor time, and so on).

While **Fig. 2** depicts a single detection module **220** and determination module **230** part of the client module **120** and a single selection module **240** part of the antivirus server **140** of the antivirus system **200,** examples of the present disclosure may use different configurations of the antivirus system **200** having multiples of the modules and/or situated differently in the client and server side. For example, in one example, the antivirus system **100** for scanning of web pages may have several modules **102** of the antivirus system for scanning web pages **110** and one available communications channel **120** by which each of the several modules **102** of the antivirus system for scanning web pages **110** are connected to one antivirus server **140.** For example, the system **100** may have multiple modules **102** in a situation in which three web browsers are installed on the computer system **101** of the user. One module of the antivirus system for scanning web pages **110** apiece may be installed on two of the web browsers, being realized in the form of an extension to the web browser. On the third web browser, a web page can be opened in which the client module **102** of the antivirus system for scanning web pages **110** is realized in the form of a JavaScript module part of the web page. In this case, the system for allocating a portion of the productivity reserve of the antivirus server for performance of the antivirus scan of the web page may include three detection module **220,** one determination module **230** and one selection module **240,** connected to the rules database **250.** In such cases, for a uniform distribution, the communications channel capacity is distributed among the detection module **220.** For example, the value of the communications channel capacity may be divided into three equal portions.

In another example, the antivirus system **100** for scanning of web pages can have several modules **102** of the antivirus system for scanning web pages **110** and a separate available communications channel **120** corresponding to each module, connecting each of the modules of the antivirus system for scanning web pages **110** to one antivirus server **140.** For example, when three users on personal computer systems with an installed web browser and the client module **102** of the antivirus system for scanning web pages **110,** which is realized in the form of an extension to the web browser, open web pages, and only one antivirus server **140** of the several which are present is available at the given time. In this case, the system for allocating a portion of the productivity reserve of the antivirus server for performance of the antivirus scan of the web page may include three detection modules **220,** three determination modules **230** and one selection module **240,** connected to the rules database **250.** In such cases, for a uniform distribution, the productivity reserve of the antivirus server **140** is distributed among the determination modules **230.** For example, the value of the productivity reserve of the antivirus server **140** is divided into three equal portions.

In yet another example, the antivirus system for scanning of web pages can have one client module **102** of the antivirus system for scanning web pages **110** and a corresponding communications channel **120** by which the client module **102** of the antivirus system for scanning web pages **110** is connected to several antivirus servers **140.** For example, when one user on a computer system with the installed web browser and the client module **102** of the antivirus system for scanning web pages **110,** which is realized in the form of an extension to the web browser, opens web pages, and three antivirus servers **140** are available. In this case, the system for allocating a portion of the productivity reserve of the antivirus server for performance of the antivirus scan of the web page may consist of one detection module **220,** one determination module **230** and three selection modules **240,** connected to the rules database **250.** In such cases, for a uniform distribution, the generated text set in markup language of the web page being opened for the antivirus scan is distributed among the determination module **230.** For example, the generated text set in markup language of the web page being opened is divided into three equal portions.

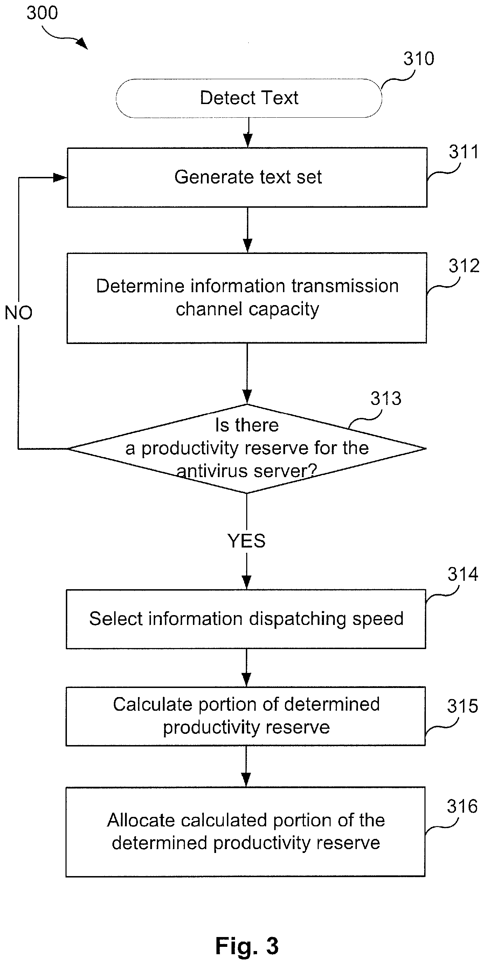

**Fig. 3** illustrates a flowchart of a method **300** for allocating a portion of the productivity reserve of the antivirus server in performing the antivirus scan of a web page according to an example.

In step **310,** the detection module **220** detects the text in markup language of the web page being opened **210.** In some examples, the detection module **220** detects a successful execution of a series of interactions with a graphical user interface of the web browser that signify an opening of the web page in the web browser. In some examples, the detection module **220** detects a transition by a hyperlink located on the web page being opened. In some examples, the detection module **220** detects one or more events generated by the web browser which indicate alteration of a document object of the web page being opened

In step **311,** the detection module **220** generates the text set in markup language of the web page being opened for the antivirus scan and sends the generated text set of the web page being opened for the antivirus scan to the selection module **240.** In some examples, the detection module **220** generates the text set by adding characters and strings of text in markup language of the web page being opened that contain a tag. In other examples, the detection module **220** generates the text set by adding strings containing an insertion of program text in a programming language.

In step **312,** the determination module **230** determines the communications channel capacity between the client module **102** of the antivirus system for scanning web pages **110** and the antivirus server **140.** In some examples, the determination module **230** dispatches a plurality of requests containing a verified text set in markup language of a predetermined size, detects receipt of the requests, and calculates time spent on transmission of the verified text set in markup language of predetermined size.

In step **313,** the determination module **230** determines whether the antivirus server **140** has a productivity reserve. In some examples in which the determination module **230** is part of the client module **102,** the antivirus server **140** may receive an indication of the productivity reserve as determined by the client module **102.** In some examples, the antivirus server **140** may determine the productivity reserve as the difference between the value of the peak and the current productivity of the antivirus server, as measured by the additional number of text characters or bytes in markup language whose antivirus scan can be performed by the antivirus server to reach its peak productivity.

If a productivity reserve is present in the antivirus server in step **313,** the determination module **230** sends the data on the determined communications channel capacity between the client module **102** of the antivirus system for scanning web pages **110** and the antivirus server **140** and the data on the determined productivity reserve of the antivirus server **140** to the selection module **240.** As such, in some examples, the antivirus server **140** may receive, from the client module **102,** a text set generated based on markup language of a web page being opened for an antivirus scan, and an indication of a capacity of a communications channel between the client module and an antivirus server.

In step **314,** the selection module **240** selects the information dispatching speed from the client module **102** of the antivirus system for scanning web pages **110** to the antivirus server **140** on the basis of the generated text set of the web page being opened in markup language for the antivirus scan, the determined communications channel capacity, and the determined productivity reserve of the antivirus server **140.** In some examples, the antivirus server may select the speed of dispatching information from the module of the antivirus system for scanning of web pages to the antivirus server based on one or more speed selection rules from the rules database **250.**

In step **315,** the selection module **240** calculates the portion of the determined productivity reserve of the antivirus server **140** needed to perform the antivirus scan of the generated text set of the web page being opened in markup language, taking into account the selected information dispatching speed. In step **316,** the selection module **240** allocates the calculated portion of the determined productivity reserve of the antivirus server **140.** The antivirus system **140** may then perform the antivirus scan of the generated text set in markup language of the web page being opened using the allocated portion of the productivity reserve of the antivirus server.

If there is no productivity reserve left for the antivirus server in step **313** (i.e., "NO" branch of step **313**), the determination module **230** sends the generated text set of the web page being opened for the antivirus scan to the detection module **220** for repeat generation of the generated text set in markup language of the web page being opened for the antivirus scan.

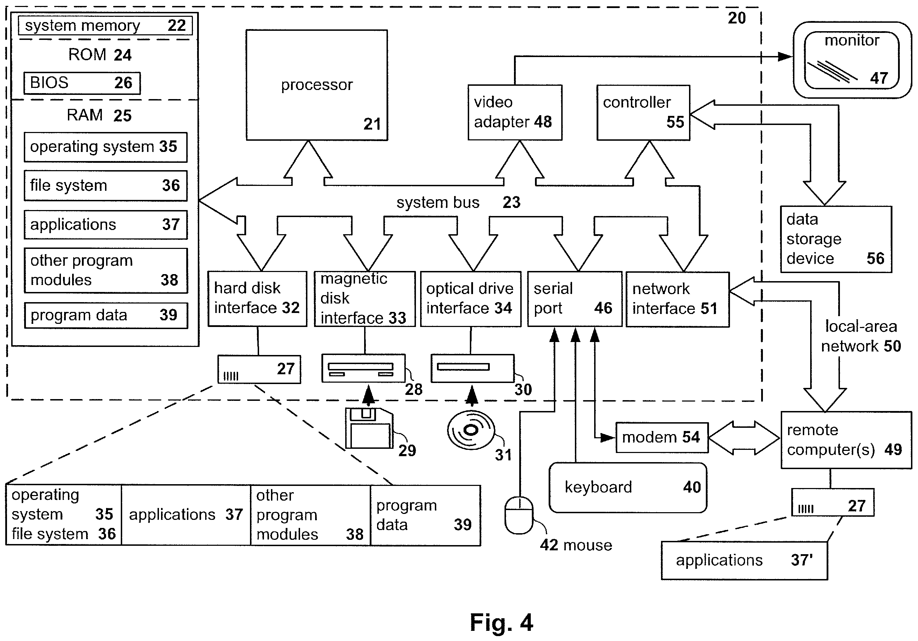

**Fig. 4** is a diagram illustrating a general-purpose computer system **20** on which systems and methods for scanning web pages may be implemented in accordance with an example. The computer system **20** may be configured as the computer system **101** or as the antivirus server **140,** described earlier.

As shown, the computer system **20** (which may be a personal computer or a server) includes a central processing unit **21,** a system memory **22** and a system bus **23** connecting the various system components, including the memory associated with the central processing unit **21.** As will be appreciated by those of ordinary skill in the art, the system bus **23** may comprise a bus memory or bus memory controller, a peripheral bus, and a local bus that is able to interact with any other bus architecture. The system memory may include permanent memory (ROM) **24** and random-access memory (RAM) **25.** The basic input/output system (BIOS) **26** may store the basic procedures for transfer of information between elements of the computer system **20,** such as those at the time of loading the operating system with the use of the ROM **24.**

The computer system **20,** may also comprise a hard disk **27** for reading and writing data, a magnetic disk drive **28** for reading and writing on removable magnetic disks 29, and an optical drive **30** for reading and writing removable optical disks **31,** such as CD-ROM, DVD-ROM and other optical media. The hard disk **27,** the magnetic disk drive **28,** and the optical drive **30** are connected to the system bus **23** across the hard disk interface **32,** the magnetic disk interface **33** and the optical drive interface **34,** respectively. The drives and the corresponding computer information media are power-independent modules for storage of computer instructions, data structures, program modules and other data of the computer system **20.**

An example comprises a system that uses a hard disk **27,** a removable magnetic disk **29** and a removable optical disk **31** connected to the system bus **23** via the controller **55.** It will be understood by those of ordinary skill in the art that any type of media **56** that is able to store data in a form readable by a computer (solid state drives, flash memory cards, digital disks, random-access memory (RAM) and so on) may also be utilized.

The computer system **20** has a file system **36,** in which the operating system **35,** may be stored, as well as additional program applications **37,** other program modules **38,** and program data **39.** A user of the computer system **20** may enter commands and information using keyboard 40, mouse 42, or any other input device known to those of ordinary skill in the art, such as, but not limited to, a microphone, joystick, game controller, scanner, *etc.* Such input devices typically plug into the computer system **20** through a serial port **46,** which in turn is connected to the system bus, but those of ordinary skill in the art will appreciate that input devices may be also be connected in other ways, such as, without limitation, via a parallel port, a game port, or a universal serial bus (USB). A monitor **47** or other type of display device may also be connected to the system bus **23** across an interface, such as a video adapter **48.** In addition to the monitor **47,** the personal computer may be equipped with other peripheral output devices (not shown), such as loudspeakers, a printer, *etc.*

Computer system **20** may operate in a network environment, using a network connection to one or more remote computers **49.** The remote computer (or computers) **49** may be local computer workstations or servers comprising most or all of the aforementioned elements in describing the nature of a computer system **20.** Other devices may also be present in the computer network, such as, but not limited to, routers, network stations, peer devices or other network nodes.

Network connections can form a local-area computer network (LAN) **50** and a wide-area computer network (WAN). Such networks are used in corporate computer networks and internal company networks, and they generally have access to the Internet. In LAN or WAN networks, the personal computer **20** is connected to the local-area network **50** across a network adapter or network interface **51.** When networks are used, the computer system **20** may employ a modem **54** or other modules well known to those of ordinary skill in the art that enable communications with a wide-area computer network such as the Internet. The modem **54,** which may be an internal or external device, may be connected to the system bus **23** by a serial port **46.** It will be appreciated by those of ordinary skill in the art that said network connections are non-limiting examples of numerous well-understood ways of establishing a connection by one computer to another using communication modules.

In various embodiments, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various embodiments, the systems and methods described in the present disclosure can be addressed in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a general purpose computer (such as the one described in greater detail in Figure 3, *supra*). Accordingly, each module may be realized in a variety of suitable configurations, and should not be limited to any particular implementation exemplified herein.

In the interest of clarity, not all of the routine features of the embodiments are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

The various embodiments disclosed herein encompass present and future known equivalents to the known modules referred to herein by way of illustration. Moreover, while embodiments and applications have been shown and described, it would be apparent to those skilled in the art having the benefit of this disclosure that many more modifications than mentioned above are possible without departing from the inventive concepts disclosed herein.

## Claims

1. An antivirus system (100) for performing an antivirus scan of a web page (110), the system (100) comprising:
an antivirus server (140); and
a client module (102) of the antivirus system (100) for scanning of web pages (110) configured to:
detect text in markup language of a web page (110) being opened;
generate a text set in the markup language of the web page (110) being opened for the antivirus scan;
determine a capacity of a communications channel (120) between the client module (102) and the antivirus server (140); and
determine a productivity reserve of the antivirus server (140), wherein a productivity of the antivirus server (140) is the number of text characters or bytes in markup language whose antivirus scan is performed by the antivirus server (140) in a period of time, and wherein the client module (102) is installed on a user computer system (101) and is further configured to:
send a verified text set in markup language of predetermined size to the antivirus server (140) to perform a forced antivirus scan of the verified text set by the antivirus server (140), and
calculate time spent on scanning the verified text set;
wherein the antivirus server (140) is configured to:
select a speed of dispatching information from the client module (102) to the antivirus server (140) based on the generated text set in markup language of the web page (110) being opened for the antivirus scan, the determined capacity of the communications channel (120), and the determined productivity reserve of the antivirus server (140);
allocate a portion of the determined productivity reserve of the antivirus server (140) to perform the antivirus scan of the generated text set in markup language of the web page (110) being opened, based on the selected information dispatching speed; and
perform the antivirus scan of the generated text set in markup language of the web page (110) being opened using the allocated portion of the productivity reserve of the antivirus server (140).

2. The system (100) according to claim 1, wherein the antivirus server (140) is further configured to select the speed of dispatching information from the client module (102) of the antivirus system (100) for scanning of web pages (110) to the antivirus server (140) further based on at least one speed selection rule from a rules database (250).

3. The system (100) according to any of claims 1 to 2, wherein the client module (102) configured to detect text in markup language of a web page (110) being opened is further configured to:
detect a successful execution of a series of interactions with a graphical user interface of the web browser (104) that signify an opening of the web page (104) in the web browser (104).

4. The system (100) according to any of claims 1 to 3, wherein the client module (102) configured to detect text in markup language of a web page (110) being opened is further configured to:
detect a transition by a hyperlink located on the web page (110) being opened.

5. The system (100) according to any of claims 1 to 4, wherein the client module (102) configured to detect text in markup language of a web page (110) being opened is further configured to:
detect one or more events generated by the web browser (104) which indicate alteration of a document object of the web page (110) being opened.

6. The system (100) according to any of claims 1 to 5, wherein the client module (102) configured to generate the text set in the markup language of the web page (110) being opened for the antivirus scan is further configured to add strings containing an insertion of program text in a programming language.

7. The system (100) according to any of claims 1 to 6, wherein the client module (102) configured to generate the text set in the markup language of the web page (110) being opened for the antivirus scan is further configured to add characters and strings of text in markup language of the web page (110) being opened that contain a tag.

8. The system (100) according to any of claims 1 to 7, wherein the client module (102) configured to determine the capacity of the communications channel (120) between the client module (102) and the antivirus server (140) is further configured to:
dispatch a plurality of requests containing a verified text set in markup language of a predetermined size, detect receipt of the requests, and calculate time spent on transmission of the verified text set in markup language of predetermined size.

9. A method for performing an antivirus scan of a web page (110) by an antivirus system (100), the method comprising:
receiving, from a client module (102) of a web browser (104) application, a text set generated based on markup language of a web page (110) being opened for an antivirus scan;
receiving an indication of a capacity of a communications channel (120) between the client module (102) and an antivirus server (140);
determining a productivity reserve of the antivirus server (140), wherein a productivity of the antivirus server (140) is the number of text characters or bytes in markup language whose antivirus scan is performed by the antivirus server (140) in a period of time, and wherein the client module (102) is installed on a user computer system (101), wherein determining the productivity reserve of the antivirus server (140) further comprises:
sending a verified text set in markup language of predetermined size to the antivirus server (140) to perform a forced antivirus scan of the verified text set by the antivirus server (140), and
calculating time spent on scanning the verified text set;
selecting a speed of dispatching information from the client module (102) to the antivirus server (140) based on the received text set in markup language of the web page (110) being opened for the antivirus scan, the received capacity of the communications channel (120), and the determined productivity reserve of the antivirus server (140);
allocating a portion of the determined productivity reserve of the antivirus server (140) to perform the antivirus scan of the generated text set in markup language of the web page (110) being opened, based on the selected information dispatching speed; and
performing, by the antivirus server (140), the antivirus scan of the generated text set in markup language of the web page (110) being opened using the allocated portion of the productivity reserve of the antivirus server (140).

10. The method according to claim 9, wherein determining the productivity reserve of the antivirus server (140) comprises receiving an indication of the productivity reserve from the client module (102).

11. The method according to any of claims 9 to 10, wherein selecting the speed of dispatching information from the client module (102) of the antivirus system (100) for scanning of web pages (110) to the antivirus server (140) is further based on at least one speed selection rule from a rules database (250).

12. The method according to any of claims 9 to 11, wherein determining the capacity of the communications channel (120) between the client module (102) and the antivirus server (140) further comprises:
dispatching a plurality of requests containing a verified text set in markup language of a predetermined size, detecting receipt of the requests, and calculating of time spent on transmission of the verified text set in markup language of predetermined size.

13. The method according to any of claims 9 to 12, wherein the speed of dispatching information from the client module (102) to the antivirus server (140) is selected by modifying a request payload size and a request sending time interval for requests from the client module (102).

## Patentansprüche

1. Ein Antivirussystem (100) zum Durchführen eines Antivirusscans einer Webseite (110), wobei das System (100) umfasst:
einen Antivirusserver (140); und
ein Clientmodul (102) des Antivirussystems (100) zum Scannen von Webseiten (110), das ausgelegt ist zum:
Detektieren eines Textes in Auszeichnungssprache einer geöffneten Webseite (110);
Generieren eines Textsatzes in der Auszeichnungssprache der geöffneten Webseite (110) für den Antivirusscan;
Bestimmen der Kapazität eines Kommunikationskanals (120) zwischen dem Clientmodul (102) und dem Antivirusserver (140); und
Bestimmen einer Produktivitätsreserve des Antivirusservers (140), wobei eine Produktivität des Antivirusservers (140) die Anzahl der Textzeichen oder Bytes in der Auszeichnungssprache ist, deren Antivirusscan durch den Antivirusserver (140) in einer Zeitspanne durchgeführt wird, und wobei das Clientmodul (102) auf einem Computersystem (101) eines Anwenders installiert ist und ferner ausgelegt ist zum:
Senden eines verifizierten Textsatzes in Auszeichnungssprache einer vorbestimmten Größe an den Antivirusserver (140) zum Ausführen eines erzwungenen Antivirusscans des verifizierten Textsatzes durch den Antivirusserver (140), und
Berechnen der Zeit, die zum Scannen des verifizierten Textsatzes verbraucht wurde;
wobei der Antivirusserver (140) ausgelegt ist zum:
Auswählen einer Geschwindigkeit zum Versenden von Informationen von dem Clientmodul (102) zu dem Antivirusserver (140) auf der Basis des generierten Textsatzes in der Auszeichnungssprache der geöffneten Webseite (110) für den Antivirusscan, der bestimmten Kapazität des Kommunikationskanals (120) und der bestimmten Produktivitätsreserve des Antivirusservers (140);
Zuordnen eines Teils der bestimmten Produktivitätsreserve des Antivirusservers (140) zur Ausführung des Antivirusscans des generierten Textsatzes in der Auszeichnungssprache der für den Antivirusscan geöffneten Webseite (110) auf der Basis der Auswahl der Geschwindigkeit zum Versenden von Informationen; und
Ausführen des Antivirusscans des generierten Textsatzes in der Auszeichnungssprache der geöffneten Webseite (110) unter Verwendung des zugeordneten Teils der Produktivitätsreserve des Antivirusservers (140).

2. System (100) nach Anspruch 1, wobei der Antivirusserver (140) ferner ausgelegt ist, die Geschwindigkeit zum Versenden von Informationen von dem Clientmodul (102) des Antivirussystems (100) zum Scannen von Webseiten (110) zu dem Antivirusserver (140) zusätzlich auf der Basis von wenigstens einer Geschwindigkeitswahlregel aus einer Regeldatenbank (250) zu wählen.

3. System (100) nach einem der Ansprüche 1 bis 2, wobei das Clientmodul (102), das zum Detektieren eines Textes in der Auszeichnungssprache einer geöffneten Webseite (110) ausgelegt ist, zusätzlich ausgelegt ist zum:
Detektieren einer erfolgreichen Ausführung einer Serie von Interaktionen mit einem grafischen Anwenderinterface des Webbrowsers (104), die auf eine Öffnung der Webseite (104) in dem Webbrowser (104) hinweisen.

4. System (100) nach einem der Ansprüche 1 bis 3, wobei das Clientmodul (102), das zum Detektieren eines Textes in der Auszeichnungssprache einer geöffneten Webseite (110) ausgelegt ist, zusätzlich ausgelegt ist zum:
Detektieren einer Veränderung durch einen Hyperlink, der auf der geöffneten Webseite (110) angeordnet ist.

5. System (100) nach einem der Ansprüche 1 bis 4, wobei das Clientmodul (102), das zum Detektieren eines Textes in der Auszeichnungssprache einer geöffneten Webseite (110) ausgelegt ist, zusätzlich ausgelegt ist zum:
Detektieren eines oder mehreren durch den Webbrowser (104) generierter Ereignisse, die eine Veränderung eines Objektdokuments der geöffneten Webseite (110) anzeigen.

6. System (100) nach einem der Ansprüche 1 bis 5, wobei das Clientmodul (102), das zum Generieren des Textsatzes in der Auszeichnungssprache der geöffneten Webseite (110) für den Antivirusscan ausgelegt ist, zusätzlich ausgelegt ist zum Hinzufügen von Strings, die eine Einfügung von Programmtexten in einer Programmiersprache enthalten.

7. System (100) nach einem der Ansprüche 1 bis 6, wobei das Clientmodul (102), das zum Generieren des Textsatzes in der Auszeichnungssprache der geöffneten Webseite (110) für den Antivirusscan ausgelegt ist, zusätzlich ausgelegt ist zum Hinzufügen von Zeichen und Textstrings in der Auszeichnungssprache der geöffneten Webseite, die einen Tag enthalten.

8. System (100) nach einem der Ansprüche 1 bis 7, wobei das Clientmodul (102), das zum Bestimmen der Kapazität des Kommunikationskanals (120) zwischen dem Clientmodul (102) und dem Antivirusserver (140) ausgelegt ist, zusätzlich ausgelegt ist zum:
Versenden einer Vielzahl von Anfragen, die einen in Auszeichnungssprache einer vorbestimmten Größe verifizierten Textsatz enthalten, Detektieren des Empfangs der Anfragen und Berechnen der Zeit, die zum Übertragen des in Auszeichnungssprache einer vorbestimmten Größe verifizierten Textsatzes verbraucht wurde.

9. Ein Verfahren zum Ausführen eines Antivirusscans einer Webseite (110) durch ein Antivirussystem (100), wobei das Verfahren umfasst:
Empfangen, von einem Clientmodul (102) einer Webbrowseranwendung (104), eines Textsatzes, generiert auf der Basis einer Auszeichnungssprache einer geöffneten Webseite (110) für einen Antivirusscan;
Empfangen einer Anzeige einer Kapazität eines Kommunikationskanals (120) zwischen dem Clientmodul (102) und einem Antivirusserver (140);
Bestimmen einer Produktivitätsreserve des Antivirusservers (140), wobei eine Produktivität des Antivirusservers (140) die Anzahl der Textzeichen oder Bytes in der Auszeichnungssprache ist, deren Antivirusscan durch den Antivirusserver (140) in einer Zeitspanne durchgeführt wird, und wobei das Clientmodul (102) auf einem Computersystem (101) eines Anwenders installiert, wobei das Bestimmen der Produktivitätsreserve des Antivirusservers (140) ferner umfasst:
Senden eines verifizierten Textsatzes in Auszeichnungssprache einer vorbestimmten Größe an den Antivirusserver (140) zum Ausführen eines erzwungenen Antivirusscans des verifizierten Textsatzes durch den Antivirusserver (140), und
Berechnen der Zeit, die zum Scannen des verifizierten Textsatzes verbraucht wurde;
Auswählen einer Geschwindigkeit zum Versenden von Informationen von dem Clientmodul (102) zu dem Antivirusserver (140) auf der Basis des generierten Textsatzes in der Auszeichnungssprache der geöffneten Webseite (110) für den Antivirusscan, der bestimmten Kapazität des Kommunikationskanals (120) und der bestimmten Produktivitätsreserve des Antivirusservers (140);
Zuordnen eines Teils der bestimmten Produktivitätsreserve des Antivirusservers (140) zur Ausführung des Antivirusscans des generierten Textsatzes in der Auszeichnungssprache der geöffneten Webseite (110) für den Antivirusscan, auf der Basis der Auswahl der Geschwindigkeit zum Versenden von Informationen; und
Ausführen durch den Antivirusserver (140) des Antivirusscans des generierten Textsatzes in der Auszeichnungssprache der geöffneten Webseite (110), unter Verwendung des zugeordneten Teils der Produktivitätsreserve des Antivirusservers (140).

10. Verfahren nach Anspruch 9, wobei das Bestimmen der Produktivitätsreserve des Antivirusservers (140) den Empfang einer Anzeige der Produktivitätsreserve von dem Clientmodul (102) umfasst.

11. Verfahren nach einem der Ansprüche 9 bis 10, wobei das Auswählen der Geschwindigkeit zum Versenden von Informationen von dem Clientmodul (102) des Antivirussystems (100) zum Scannen von Webseiten (110) zu dem Antivirusserver (140) außerdem auf wenigstens einer Geschwindigkeitswahlregel aus einer Regeldatenbank (250) basiert.

12. Verfahren nach einem der Ansprüche 9 bis 11, wobei das Bestimmen der Kapazität des Kommunikationskanals (120) zwischen dem Clientmodul (102) und dem Antivirusserver (140) außerdem umfasst:
Versenden einer Vielzahl von Anfragen, die einen verifizierten Textsatz in Auszeichnungssprache einer vorbestimmten Größe enthalten, Detektieren des Empfangs der Anfragen und Berechnen der Zeit, die zum Übertragen des verifizierten Textsatzes in Auszeichnungssprache einer vorbestimmten Größe verbraucht wurde.

13. Verfahren nach einem der Ansprüche 9 bis 12, wobei die Geschwindigkeit zum Versenden von Informationen von dem Clientmodul (102) zu dem Antivirusserver (140) ausgewählt wird durch eine Modifizierung einer Anfrage der Größe der Nutzerdaten und einer Anfrage der Sendezeitintervalle für Anfragen von dem Clientmodul (102).

## Revendications

1. Système antivirus (100) destiné à l'exécution d'un balayage antivirus d'une page web (110), le système (100) comprenant :
un serveur antivirus (140), et
un module client (102) du système antivirus (100) destiné au balayage de pages web (110) configuré de façon à :
détecter du texte dans du langage de balisage d'une page web (110) qui est ouverte,
générer un ensemble textuel en langage de balisage de la page web (110) qui est ouverte pour le balayage antivirus,
déterminer une capacité d'un canal de communication (120) entre le module client (102) et le serveur antivirus (140), et
déterminer une réserve de productivité du serveur antivirus (140), une productivité du serveur antivirus (140) étant le nombre de caractères de texte ou d'octets en langage de balisage dont le balayage antivirus est exécuté par le serveur antivirus (140) dans une période temporelle, et le module client (102) étant installé sur un système informatique d'utilisateur (101) et étant configuré en outre de façon à:
envoyer un ensemble textuel vérifié en langage de balisage d'une taille prédéterminée au serveur antivirus (140) de façon à exécuter un balayage antivirus forcé de l'ensemble textuel vérifié par le serveur antivirus (140), et
calculer le temps passé au balayage de l'ensemble textuel vérifié,
le serveur antivirus (140) étant configuré de façon à :
sélectionner une vitesse d'expédition d'informations du module client (102) au serveur antivirus (140) en fonction de l'ensemble textuel généré en langage de balisage de la page web (110) qui est ouverte pour le balayage antivirus, de la capacité déterminée du canal de communication (120) et de la réserve de productivité déterminée du serveur antivirus (140),
attribuer un partie de la réserve de productivité déterminée du serveur antivirus (140) de façon à exécuter le balayage antivirus de l'ensemble textuel généré en langage de balisage de la page web (110) qui est ouverte, en fonction de la vitesse d'expédition d'informations sélectionnée, et
exécuter le balayage antivirus de l'ensemble textuel généré en langage de balisage de la page web (110) qui est ouverte au moyen de la partie attribuée de la réserve de productivité du serveur antivirus (140).

2. Système (100) selon la revendication 1, dans lequel le serveur antivirus (140) est configuré en outre de façon à sélectionner la vitesse d'expédition d'informations du module client (102) du système antivirus (100) pour le balayage de pages web (110) vers le serveur antivirus (140) en fonction en outre d'au moins une règle de sélection de vitesse à partir d'une base de données de règles (250).

3. Système (100) selon l'une quelconque des revendications 1 à 2, dans lequel le module client (102) configuré de façon à détecter du texte dans du langage de balisage d'une page web (110) qui est ouverte est configuré en outre de façon à :
détecter une exécution réussie d'une série d'interactions avec une interface utilisateur graphique du navigateur web (104) qui signifie une ouverture de la page web (104) dans le navigateur web (104).

4. Système (100) selon l'une quelconque des revendications 1 à 3, dans lequel le module client (102) configuré de façon à détecter du texte dans du langage de balisage d'une page web (110) qui est ouverte est configuré en outre de façon à :
détecter une transition par un hyperlien situé sur la page web (110) qui est ouverte.

5. Système (100) selon l'une quelconque des revendications 1 à 4, dans lequel le module client (102) configuré de façon à détecter du texte en langage de balisage d'une page web (110) qui est ouverte est configuré en outre de façon à :
détecter un ou plusieurs événements générés par le navigateur web (104) qui indique(nt) une modification d'un objet document de la page web (110) qui est ouverte.

6. Système (100) selon l'une quelconque des revendications 1 à 5, dans lequel le module client (102) configuré de façon à générer l'ensemble textuel en langage de balisage de la page web (110) qui est ouverte pour le balayage antivirus est configuré en outre de façon à ajouter des chaînes contenant une insertion de texte de programme dans un langage de programmation.

7. Système (100) selon l'une quelconque des revendications 1 à 6, dans lequel le module client (102) configuré de façon à générer l'ensemble textuel en langage de balisage de la page web (110) qui est ouverte pour le balayage antivirus est configuré en outre de façon à ajouter des caractères et des chaînes de texte dans du langage de balisage de la page web (110) qui est ouverte qui contiennent une balise.

8. Système (100) selon l'une quelconque des revendications 1 à 7, dans lequel le module client (102) configuré de façon à déterminer la capacité du canal de communication (120) entre le module client (102) et le serveur antivirus (140) est configuré en outre de façon à :
expédier une pluralité de demandes contenant un ensemble textuel vérifié en langage de balisage d'une taille prédéterminée, détecter la réception des demandes et calculer le temps passé à la transmission de l'ensemble textuel vérifié en langage de balisage d'une taille prédéterminée.

9. Procédé d'exécution d'un balayage antivirus d'une page web (110) par un système antivirus (100), le procédé comprenant :
la réception, à partir d'un module client (102) d'une application de navigation web (104), d'un ensemble textuel généré en fonction d'un langage de balisage d'une page web (110) qui est ouverte pour un balayage antivirus,
la réception d'une indication d'une capacité d'un canal de communication (120) entre le module client (102) et un serveur antivirus (140),
la détermination d'une réserve de productivité du serveur antivirus (140), une productivité du serveur antivirus (140) étant le nombre de caractères de texte ou d'octets en langage de balisage dont le balayage antivirus est exécuté par le serveur antivirus (140) dans une période temporelle, et le module client (102) étant installé sur un système informatique d'utilisateur (101), la détermination de la réserve de productivité du serveur antivirus (140) comprenant en outre :
l'envoi d'un ensemble textuel vérifié en langage de balisage d'une taille prédéterminée au serveur antivirus (140) de façon à exécuter un balayage antivirus forcé de l'ensemble textuel vérifié par le serveur antivirus (140), et
le calcul du temps passé au balayage de l'ensemble textuel vérifié,
la sélection d'une vitesse d'expédition d'informations du module client (102) au serveur antivirus (140) en fonction de l'ensemble textuel reçu en langage de balisage de la page web (110) qui est ouverte pour le balayage antivirus, de la capacité reçue du canal de communication (120) et de la réserve de productivité déterminée du serveur antivirus (140),
l'attribution d'une partie de la réserve de productivité déterminée du serveur antivirus (140) de façon à exécuter le balayage antivirus de l'ensemble textuel généré en langage de balisage de la page web (110) qui est ouverte en fonction de la vitesse d'expédition d'informations sélectionnée, et
l'exécution, par le serveur antivirus (140), du balayage antivirus de l'ensemble textuel généré en langage de balisage de la page web (110) qui est ouverte au moyen de la partie attribuée de la réserve de productivité du serveur antivirus (140).

10. Procédé selon la revendication 9, dans lequel la détermination de la réserve de productivité du serveur antivirus (140) comprend la réception d'une indication de la réserve de productivité à partir du module client (102).

11. Procédé selon l'une quelconque des revendications 9 à 10, dans lequel la sélection de la vitesse d'expédition d'informations du module client (102) du système antivirus (100) pour le balayage de pages web (110) au serveur antivirus (140) est basée en outre sur au moins une règle de sélection de vitesse à partir d'une base de données de règles (250).

12. Procédé selon l'une quelconque des revendications 9 à 11, dans lequel la détermination de la capacité du canal de communication (120) entre le module client (102) et le serveur antivirus (140) comprend en outre :
l'expédition d'une pluralité de demandes contenant un ensemble textuel vérifié en langage de balisage d'une taille prédéterminée, la détection de la réception des demandes et le calcul du temps passé à la transmission de l'ensemble textuel vérifié en langage de balisage d'une taille prédéterminée.

13. Procédé selon l'une quelconque des revendications 9 à 12, dans lequel la vitesse d'expédition d'informations du module client (102) au serveur antivirus (140) est sélectionnée par la modification d'une taille de charge utile de demande et d'un intervalle temporel d'envoi de demande pour des demandes provenant du module client (102).
